(19) Europäisches Patentamt
European Patent Office
Office européen des brevets

(11) EP 3 421 260 A1

(12) EUROPEAN PATENT APPLICATION

(43) Date of publication:
**02.01.2019 Bulletin 2019/01**

(51) Int Cl.:
***B60C 1/00*** *(2006.01)* ***C08K 5/103*** *(2006.01)*

(21) Application number: **18158310.5**

(22) Date of filing: **23.02.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **29.06.2017 JP 2017127559**

(71) Applicant: **Sumitomo Rubber Industries, Ltd.**
**Kobe-shi, Hyogo 651-0072 (JP)**

(72) Inventors:
- **SATO, Daisuke**
  **Kobe-shi, Hyogo 651-0072, (JP)**
- **MIYAZAKI, Sumiko**
  **Kobe-shi, Hyogo 651-0072, (JP)**

(74) Representative: **TBK**
**Bavariaring 4-6**
**80336 München (DE)**

# (54) RUBBER COMPOSITION AND PNEUMATIC TIRE

(57) The present invention provides a rubber composition which provides a balanced improvement of initial wet grip performance, wet grip performance after aging, fuel economy, and abrasion resistance. Also provided is a pneumatic tire formed from the rubber composition. The rubber composition contains: a rubber component including a diene rubber; and a glycerol fatty acid triester of plant origin. The glycerol fatty acid triester has a content of saturated fatty acids of 10 to 25% by mass and a content of monovalent unsaturated fatty acids having one unsaturated bond of less than 50% by mass, each based on 100% by mass of the constituent fatty acids of the triester.

EP 3 421 260 A1

**Description**

TECHNICAL FIELD

The present invention relates to a rubber composition and a pneumatic tire.

BACKGROUND ART

In recent years, various manufacturing industries have been seeking to reduce carbon dioxide emissions to prevent global warming. The efforts that have been made in the tire industry include replacing plasticizers or rubbers produced from petroleum resources respectively with vegetable oils or natural rubber or rubbers synthesized from naturally occurring monomers.

In particular, the use of vegetable oils contributes not only to a reduction in carbon dioxide emissions but also to an improvement in functional performance of tires such as improved wet grip performance. For example, Patent Literature 1 reports that the incorporation of a vegetable oil with a high oleic acid content leads to improved wet grip performance.

CITATION LIST

PATENT LITERATURE

Patent Literature 1: JP 2005-537369 T

SUMMARY OF INVENTION

TECHNICAL PROBLEM

The present invention aims to provide a rubber composition which provides a balanced improvement of initial wet grip performance, wet grip performance after aging, fuel economy, and abrasion resistance. Another object of the present invention is to provide a pneumatic tire formed from the rubber composition.

SOLUTION TO PROBLEM

The present invention relates to a rubber composition, containing: a rubber component including a diene rubber; and a glycerol fatty acid triester of plant origin, the glycerol fatty acid triester having a content of saturated fatty acids of 10 to 25% by mass and a content of monovalent unsaturated fatty acids having one unsaturated bond of less than 50% by mass, each based on 100% by mass of constituent fatty acids of the triester.

The glycerol fatty acid triester preferably has a content of polyvalent unsaturated fatty acids having two or more unsaturated bonds of 50% by mass or more based on 100% by mass of the constituent fatty acids.

The glycerol fatty acid triester preferably satisfies the following relationship (A):

80 ≤ the content (% by mass) of monovalent unsaturated fatty acids having one unsaturated bond based on 100% by mass of the constituent fatty acids × 1 (the number of unsaturated bonds) + the content (% by mass) of divalent unsaturated fatty acids having two unsaturated bonds based on 100% by mass of the constituent fatty acids × 2 (the number of unsaturated bonds) + the content (% by mass) of trivalent unsaturated fatty acids having three unsaturated bonds based on 100% by mass of the constituent fatty acids × 3 (the number of unsaturated bonds) ≤ 200.

The rubber composition preferably contains 10 to 80 parts by mass of the glycerol fatty acid triester per 100

parts by mass of the rubber component.

The rubber component preferably includes, based on 100% by mass thereof, at least 5% by mass of a copolymer, the copolymer being synthesized by copolymerizing a conjugated diene monomer with a compound represented by the following formula (1):

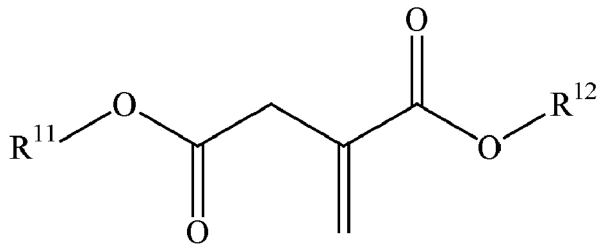

(1)

wherein $R^{11}$ and $R^{12}$ are the same or different and each represent a hydrogen atom or a C1-C30 hydrocarbon group.

The copolymer preferably contains, based on 100% by mass of structural units thereof, 5 to 95% by mass of units derived from the conjugated diene monomer and 5 to 95% by mass of units derived from the compound of formula (1).

The rubber composition preferably contains the glycerol fatty acid triester and silica in a ratio that satisfies the following relationship (B):

0.15 ≤ the amount (parts by mass) of the glycerol fatty acid triester/the amount (parts by mass) of the silica ≤ 0.70.

Preferably, the rubber composition contains a molten mixture of the glycerol fatty acid triester and a resin having a glass transition temperature of 40 to 120°C,
the molten mixture contains the glycerol fatty acid triester and the resin in a ratio that satisfies relationship (C) below, and the molten mixture has a dynamic viscosity at 30°C of 100 to 1,500 mPa·s

(C): 0.10 ≤ the amount (parts by mass) of the resin/the amount (parts by mass) of the glycerol fatty acid triester ≤ 0.70.

The rubber composition is preferably a rubber composition for tires.

Another aspect of the present invention is a pneumatic tire, including a tread formed from the rubber composition.

ADVANTAGEOUS EFFECTS OF INVENTION

The rubber composition of the present invention contains a rubber component including a diene rubber, and a glycerol fatty acid triester of plant origin which has a content of saturated fatty acids of 10 to 25% by mass and a content of monovalent unsaturated fatty acids having one unsaturated bond of less than 50% by mass, each based on 100% by mass of the constituent fatty acids of the triester. Such a rubber composition provides a balanced improvement of initial wet grip performance, wet grip performance after aging, fuel economy, and abrasion resistance.

DESCRIPTION OF EMBODIMENTS

The rubber composition of the present invention contains a rubber component including a diene rubber, and a glycerol fatty acid triester of plant origin. The glycerol fatty acid triester has a content of saturated fatty acids of 10 to 25% by mass and a content of monovalent unsaturated fatty acids having one unsaturated bond of less than 50% by mass, each based on 100% by mass of the constituent fatty acids of the triester.

The present invention provides a balanced improvement of initial wet grip performance, wet grip performance after aging, fuel economy, and abrasion resistance, probably according to the mechanism described below.

Although the incorporation of vegetable oils (glycerol fatty acid triesters) can improve the function of tires such as initial wet grip performance, the study of the present inventors revealed the following disadvantage: If a large amount of a vegetable oil having a hydrophilic moiety such as an ester moiety is incorporated into a rubber composition for tires mainly containing hydrophobic materials, the vegetable oil bleeds to the surface of the tire in service. Moreover, once the vegetable oil bleeds, it not only spoils the appearance but also reduces the friction coefficient of the rubber due to the presence of the vegetable oil between the road surface and the tire surface, thereby resulting in reduced wet grip

performance. Thus, the inventors found that the incorporation of vegetable oils provides good initial wet grip performance but disadvantageously fails to provide good wet grip performance after aging.

The inventors have conducted extensive research on the problem they newly found, resulting in focusing attention on the unsaturated bonds in vegetable oils (glycerol fatty acid triesters) as well as the saturated fatty acid content and unsaturated fatty acid content. Accordingly, they have found that when a vegetable oil (glycerol fatty acid triester) having a predetermined unsaturated bond content (predetermined saturated fatty acid content and unsaturated fatty acid content) is incorporated into a rubber composition, the unsaturated bond portions of the glycerol fatty acid triester (the unsaturated bond portions of the fatty acids forming the glycerol fatty acid triester) and a diene rubber (the unsaturated bonds in the diene rubber) can be moderately reacted (by vulcanization with a vulcanizing agent) to allow the glycerol fatty acid triester to produce a moderate softening effect on the rubber so that good initial wet grip performance can be obtained, and further to moderately bind the glycerol fatty acid triester to the rubber so that surface bleeding of the glycerol fatty acid triester can be reduced to obtain good wet grip performance after aging, fuel economy, and abrasion resistance (particularly good wet grip performance after aging). These findings have led to the completion of the present invention.

If the glycerol fatty acid triester contains too many unsaturated bonds, reactions can occur at too many sites, and therefore a sufficient softening effect cannot be obtained, thereby resulting in reduced initial wet grip performance. In addition, the crosslinking efficiency of the diene rubber can decrease, resulting in reduced abrasion resistance. Conversely, if the glycerol fatty acid triester contains too few unsaturated bonds, the glycerol fatty acid triester cannot be moderately bound to the rubber, and therefore surface bleeding of the glycerol fatty acid triester cannot be sufficiently reduced, thereby resulting in reduced wet grip performance after aging, fuel economy, and abrasion resistance. In contrast, when the glycerol fatty acid triester has a content of saturated fatty acids of 10 to 25% by mass and a content of monovalent unsaturated fatty acids having one unsaturated bond of less than 50% by mass, each based on 100% by mass of the constituent fatty acids, it is presumed that the unsaturated bond portions of the glycerol fatty acid triester (the unsaturated bond portions of the fatty acids forming the glycerol fatty acid triester) can be moderately reacted with the diene rubber to allow the glycerol fatty acid triester to produce a moderate softening effect on the rubber so that good initial wet grip performance can be obtained, and further to moderately bind the glycerol fatty acid triester to the rubber so that surface bleeding of the glycerol fatty acid triester can be reduced to obtain good wet grip performance after aging, fuel economy, and abrasion resistance (particularly good wet grip performance after aging). Thus, the present invention synergistically improves the balance of fuel economy, abrasion resistance, initial wet grip performance, and wet grip performance after aging owing to the interaction between the diene rubber and the glycerol fatty acid triester.

Moreover, since the glycerol fatty acid triester used is of plant origin, not a fossil resource, it is possible to provide tires contributing to a low-carbon society. Thus, the present invention can provide safer and more environmentally friendly tires.

Hereinafter, the term "wet grip performance" as used alone means both "initial wet grip performance" and "wet grip performance after aging".

Note that the mechanism of the present invention described herein is just a presumed one.

The rubber composition of the present invention contains a specific glycerol fatty acid triester of plant origin.

The term "glycerol fatty acid triester" refers to an ester of a fatty acid and a glycerol and is also called triglyceride or tri-O-acylglycerol.

It is known that the fatty acids forming glycerol fatty acid triesters of plant origin usually include palmitic acid (carbon number: 16, unsaturated bond number: 0), stearic acid (carbon number: 18, unsaturated bond number: 0), oleic acid (carbon number: 18, unsaturated bond number: 1), and linoleic acid (carbon number: 18, unsaturated bond number: 2) as main components. The combined content of palmitic acid, stearic acid, oleic acid, and linoleic acid based on 100% by mass of the constituent fatty acids is usually 80% by mass or more, preferably 90% by mass or more.

In the glycerol fatty acid triester, the content of saturated fatty acids based on 100% by mass of the constituent fatty acids is 10 to 25% by mass. The lower limit of the content is preferably 12% by mass or more, while the upper limit is preferably 20% by mass or less, more preferably 18% by mass or less, still more preferably 15% by mass or less. When the content of saturated fatty acids is 10% by mass or more, the glycerol fatty acid triester can be prevented from containing too many unsaturated bonds and thus from having too many reactive sites, thereby resulting in a good softening effect and thus good initial wet grip performance. Moreover, a reduction in crosslinking efficiency of the diene rubber can also be prevented, resulting in good abrasion resistance. When the content of saturated fatty acids is 25% by mass or less, the glycerol fatty acid triester can be prevented from containing too few unsaturated bonds, and thus can be moderately bound to the rubber so that surface bleeding of the glycerol fatty acid triester can be sufficiently reduced to obtain good wet grip performance after aging, fuel economy, and abrasion resistance (particularly good wet grip performance after aging). Moreover, since the content of saturated fatty acids having a relatively high melting point is low, the glycerol fatty acid triester has a low melting point, resulting in reduced energy loss and thus good fuel economy.

In the glycerol fatty acid triester, the content of monovalent unsaturated fatty acids having one unsaturated bond based on 100% by mass of the constituent fatty acids is less than 50% by mass, and preferably 45% by mass or

less, more preferably 40% by mass or less, still more preferably 35% by mass or less, particularly preferably 30% by mass or less. In this case, the number of unsaturated bonds in the glycerol fatty acid triester can be appropriately adjusted so that a moderate softening effect and moderate binding to the rubber can be achieved simultaneously, and therefore the effects of the present invention can be sufficiently achieved. The lower limit of the content is not particularly critical, but is preferably 8% by mass or more, more preferably 14% by mass or more, still more preferably 20% by mass or more, to more suitably achieve the effects of the present invention.

In the glycerol fatty acid triester, the content of polyvalent unsaturated fatty acids having two or more unsaturated bonds based on 100% by mass of the constituent fatty acids is preferably 50% by mass or more, more preferably 55% by mass or more, still more preferably 60% by mass or more. In this case, the number of unsaturated bonds in the glycerol fatty acid triester can be more appropriately adjusted so that a moderate softening effect and moderate binding to the rubber can be better achieved simultaneously, and therefore the effects of the present invention can be more suitably achieved. The upper limit of the content is not particularly critical, but is preferably 90% by mass or less, more preferably 80% by mass or less, still more preferably 70% by mass or less, to more suitably achieve the effects of the present invention.

In the glycerol fatty acid triester, the content of divalent unsaturated fatty acids having two unsaturated bonds based on 100% by mass of the constituent fatty acids is preferably 35 to 80% by mass, more preferably 40 to 70% by mass, still more preferably 45 to 65% by mass. In this case, the number of unsaturated bonds in the glycerol fatty acid triester can be more appropriately adjusted so that a moderate softening effect and moderate binding to the rubber can be better achieved simultaneously, and therefore the effects of the present invention can be more suitably achieved.

In the glycerol fatty acid triester, the content of trivalent unsaturated fatty acids having three unsaturated bonds based on 100% by mass of the constituent fatty acids is preferably 3 to 25% by mass, more preferably 5 to 15% by mass. In this case, the number of unsaturated bonds in the glycerol fatty acid triester can be more appropriately adjusted so that a moderate softening effect and moderate binding to the rubber can be better achieved simultaneously, and therefore the effects of the present invention can be more suitably achieved.

In the glycerol fatty acid triester, the total content of unsaturated fatty acids based on 100% by mass of the constituent fatty acids is preferably 75 to 90% by mass, more preferably 80 to 88% by mass, still more preferably 82 to 88% by mass, particularly preferably 85 to 88% by mass. In this case, the number of unsaturated bonds in the glycerol fatty acid triester can be more appropriately adjusted so that a moderate softening effect and moderate binding to the rubber can be better achieved simultaneously, and therefore the effects of the present invention can be more suitably achieved.

The glycerol fatty acid triester preferably satisfies relationship (A) below. In this case, the number of unsaturated bonds in the glycerol fatty acid triester can be more appropriately adjusted so that a moderate softening effect and moderate binding to the rubber can be better achieved simultaneously, and therefore the effects of the present invention can be more suitably achieved.

To more suitably achieve the effects of the present invention, the lower limit in relationship (A) is preferably 100 or more, more preferably 120 or more, still more preferably 140 or more, particularly preferably 150 or more, while the upper limit in relationship (A) is preferably 190 or less, more preferably 180 or less, still more preferably 170 or less.

(A) : $80 \leq$ the content (% by mass) of monovalent unsaturated fatty acids having one unsaturated bond based on 100% by mass of the constituent fatty acids $\times$ 1 (the number of unsaturated bonds) + the content (% by mass) of divalent unsaturated fatty acids having two unsaturated bonds based on 100% by mass of the constituent fatty acids $\times$ 2 (the number of unsaturated bonds) + the content (% by mass) of trivalent unsaturated fatty acids having three unsaturated bonds based on 100% by mass of the constituent fatty acids $\times$ 3 (the number of unsaturated bonds) $\leq 200$

Since the glycerol fatty acid triester is of plant origin, the unsaturated bonds in the constituent fatty acids are usually double bonds.

To more suitably achieve the effects of the present invention, the constituent fatty acids of the glycerol fatty acid triester preferably have an average carbon number of 15 to 21, more preferably 16 to 20, still more preferably 17 to 19.

Herein, the average carbon number of the constituent fatty acids is calculated using the following equation (D): Average carbon number of constituent fatty acids = $\Sigma$ [the content (% by mass) of fatty acids having a carbon number of n based on 100% by mass of the constituent fatty acids $\times$ n (carbon number)/100].

The glycerol fatty acid triester is preferably liquid at room temperature (25°C). The glycerol fatty acid triester preferably has a melting point of 20°C or lower, more preferably 17°C or lower, still more preferably 0°C or lower, particularly preferably -10°C or lower. In this case, better fuel economy and better initial wet grip performance can be obtained.

The lower limit of the melting point is not particularly critical, but is preferably -100°C or higher, more preferably -90°C or higher, to obtain good dry grip performance.

The melting point of the glycerol fatty acid triester may be measured by differential scanning calorimetry (DSC).

The glycerol fatty acid triester preferably has an iodine number of 60 or more, more preferably 70 or more, still more preferably 80 or more, particularly preferably 100 or more, most preferably 120 or more. The iodine number is also

preferably 160 or less, more preferably 150 or less, still more preferably 135 or less. When the iodine number is within the range indicated above, the effects of the present invention can be more suitably achieved.

Herein, the iodine number refers to the amount of halogen in milligrams, calculated as iodine, bonded when a halogen is reacted with 100 g of the glycerol fatty acid triester, and is measured by potentiometric titration in accordance with JIS K 0070.

The glycerol fatty acid triester used in the present invention may be any glycerol fatty acid triester of plant origin that has a content of saturated fatty acids of 10 to 25% by mass and a content of monovalent unsaturated fatty acids having one unsaturated bond of less than 50% by mass, each based on 100% by mass of the constituent fatty acids. Examples include soybean oil, sesame oil, rice oil, safflower oil, corn oil, olive oil, and rapeseed oil. Among these, soybean oil, sesame oil, rice oil, and rapeseed oil are preferred, with soybean oil, sesame oil, or rice oil being more preferred, with soybean oil being still more preferred, because they are inexpensive, available in bulk, and highly effective in improving performance.

The fatty acid composition of the glycerol fatty acid triester may be determined by gas-liquid chromatography (GLC).

Examples of the glycerol fatty acid triester include products of The Nisshin Oillio Group, Ltd., J-Oil Mills. Inc., Showa Sangyo, Fuji Oil Co., Ltd., Miyoshi Oil & Fat Co., Ltd., and Boso oil and fat Co., Ltd.

The amount of the glycerol fatty acid triester per 100 parts by mass of the rubber component is preferably 10 parts by mass or more, more preferably 15 parts by mass or more, still more preferably 20 parts by mass or more, particularly preferably 30 parts by mass or more, most preferably 50 parts by mass or more. When it is 10 parts by mass or more, the effects of the present invention can be more suitably achieved. The amount of the glycerol fatty acid triester is preferably 80 parts by mass or less, more preferably 70 parts by mass or less, still more preferably 60 parts by mass or less, particularly preferably 50 parts by mass or less. When it is 80 parts by mass or less, the effects of the present invention can be more suitably achieved.

In the present invention, an oil other than the glycerol fatty acid triester (the glycerol fatty acid triester specified herein) may be used in combination with the glycerol fatty acid triester.

The oil may be, for example, a process oil, vegetable fat or oil other than the glycerol fatty acid triester, or a mixture thereof. Examples of the process oil include paraffinic process oils, aromatic process oils, and naphthenic process oils. Examples of the vegetable fat or oil include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. These oils may be used alone, or two or more of these may be used in combination.

The oil may be a product of, for example, Idemitsu Kosan Co., Ltd., Sankyo Yuka Kogyo K.K., Japan Energy Corporation, Olisoy, H&R, Hokoku Corporation, Showa Shell Sekiyu K.K., or Fuji Kosan Co., Ltd.

The amount of the oil, if present, per 100 parts by mass of the rubber component is preferably 1 part by mass or more, more preferably 10 parts by mass or more. The amount is also preferably 60 parts by mass or less, more preferably 40 parts by mass or less. The amount of the oil includes the amount of the oils contained in rubbers (oil extended rubbers).

In the case where the oil other than the glycerol fatty acid triester is used together with the glycerol fatty acid triester, the combined amount of the glycerol fatty acid triester and the oil other than the glycerol fatty acid triester may suitably be the same as the amount of the glycerol fatty acid triester when used alone.

In the present invention, the rubber component includes a diene rubber.

Examples of diene rubbers that can be used include isoprene-based rubbers, polybutadiene rubber (BR), styrene-butadiene rubber (SBR), styrene-isoprene-butadiene rubber (SIBR), ethylene-propylene-diene rubber (EPDM), chloroprene rubber (CR), and acrylonitrile butadiene rubber (NBR). These rubbers may be used alone, or two or more of these may be used in combination. Examples of other rubbers that may be used in the rubber component include butyl rubbers and fluororubbers. These rubbers may be used alone, or two or more of these may be used in combination.

In the present invention, the term "rubber component" refers to a rubber having a weight average molecular weight (Mw) of 300, 000 or more, preferably 350, 000 or more. The upper limit of the Mw is not particularly critical, but is preferably 1,500,000 or less, more preferably 1,000,000 or less.

Herein, the Mw and the number average molecular weight (Mn) may be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

To more suitably achieve the effects of the present invention, the amount of the diene rubber based on 100% by mass of the rubber component is preferably 60% by mass or more, more preferably 80% by mass or more, still more preferably 90% by mass or more, particularly preferably 100% by mass.

The diene rubber is preferably an isoprene-based rubber, BR, or SBR, more preferably a combination of an isoprene-based rubber, BR, and SBR.

Examples of the isoprene-based rubber include natural rubber (NR), polyisoprene rubber (IR), refined NR,

modified NR, and modified IR. The NR may be one commonly used in the tire industry such as SIR20, RSS#3, or TSR20. Non-limiting examples of the IR include those commonly used in the tire industry such as IR2200. Examples of the refined NR include deproteinized natural rubber (DPNR) and highly purified natural rubber (UPNR) . Examples of the modified NR include epoxidized natural rubber (ENR), hydrogenated natural rubber (HNR), and grafted natural rubber. Examples of the modified IR include epoxidized polyisoprene rubber, hydrogenated polyisoprene rubber, and grafted polyisoprene rubber. These rubbers may be used alone, or two or more of these may be used in combination. Among these rubbers, NR is preferred.

The amount of the isoprene-based rubber, if present, based on 100% by mass of the rubber component is preferably 5% by mass or more, more preferably 10% by mass or more. The amount of the isoprene-based rubber is also preferably 60% by mass or less, more preferably 40% by mass or less, still more preferably 30% by mass or less. When it is within the range indicated above, the effects of the present invention tend to be better achieved.

Non-limiting examples of the BR include BR having high cis content, such as BR1220 available from Zeon Corporation and BR130B and BR150B both available from Ube Industries, Ltd.; BR containing syndiotactic polybutadiene crystals, such as VCR412 and VCR617 both available from Ube Industries, Ltd.; and BR synthesized using rare earth catalysts (rare earth-catalyzed BR). These rubbers may be used alone, or two or more of these may be used in combination. In particular, the BR preferably has a cis content of 97% by mass or more in order to improve abrasion resistance.

The BR preferably has a weight average molecular weight (Mw) of 300, 000 or more, more preferably 350, 000 or more. The Mw is preferably 550,000 or less, more preferably 500,000 or less, still more preferably 450,000 or less. When the Mw is within the range indicated above, the effects of the present invention can be more suitably achieved.

The BR may be an unmodified BR or modified BR.

The modified BR may be any BR having a functional group interactive with a filler such as silica. For example, it may be a chain end-modified BR obtained by modifying at least one chain end of BR with a compound (modifier) having the functional group (chain end-modified BR terminated with the functional group); a backbone-modified BR having the functional group in the backbone; a backbone- and chain end-modified BR having the functional group in both the backbone and chain end (e.g., a backbone- and chain end-modified BR in which the backbone has the functional group and at least one chain end is modified with the modifier); or a chain end-modified BR which has been modified (coupled) with a polyfunctional compound having two or more epoxy groups in the molecule so that a hydroxyl or epoxy group is introduced.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxyl, oxy, and epoxy groups. These functional groups may be substituted. To more suitably achieve the effects of the present invention, amino (preferably amino whose hydrogen atom is replaced with a C1-C6 alkyl group), alkoxy (preferably C1-C6 alkoxy), and alkoxysilyl (preferably C1-C6 alkoxysilyl) groups are preferred among these.

The BR may be a product of, for example, Ube Industries, Ltd., JSR Corporation, Asahi Kasei Corporation, or Zeon Corporation.

The amount of BR, if present, based on 100% by mass of the rubber component is preferably 5% by mass or more, more preferably 8% by mass or more. The amount of BR is also preferably 60% by mass or less, more preferably 30% by mass or less, still more preferably 20% by mass or less. When it is within the range indicated above, the effects of the present invention tend to be better achieved.

Non-limiting examples of the SBR include emulsion-polymerized styrene-butadiene rubber (E-SBR) and solution-polymerized styrene-butadiene rubber (S-SBR). These rubbers may be used alone, or two or more of these may be used in combination.

The SBR preferably has a styrene content of 5% by mass or more, more preferably 10% by mass or more, still more preferably 15% by mass or more. A styrene content of not less than the lower limit tends to lead to excellent wet grip performance. The styrene content is also preferably 60% by mass or less, more preferably 40% by mass or less, still more preferably 30% by mass or less. A styrene content of not more than the upper limit tends to lead to excellent abrasion resistance and excellent fuel economy.

Herein, the styrene content of the SBR is determined by $^1$H-NMR.

The SBR may be a product manufactured or sold by, for example, Sumitomo Chemical Co., Ltd., JSR Corporation, Asahi Kasei Corporation, or Zeon Corporation.

The SBR may be an unmodified SBR or modified SBR. Examples of the modified SBR include those in which functional groups as mentioned for the modified BR are introduced.

The amount of SBR, if present, based on 100% by mass of the rubber component is preferably 10% by mass or more, more preferably 50% by mass or more, still more preferably 60% by mass or more. The amount of SBR is also preferably 90% by mass or less, more preferably 80% by mass or less. When it is within the range indicated above, the effects of the present invention tend to be better achieved.

To more suitably achieve the effects of the present invention, the combined amount of the isoprene-based

rubber, BR, and SBR based on 100% by mass of the rubber component is preferably 80% by mass or more, more preferably 90% by mass or more, and may be 100% by mass.

In the present invention, the diene rubber preferably includes a copolymer synthesized by copolymerizing a conjugated diene monomer with a compound represented by formula (1) below. In other words, the diene rubber preferably includes a copolymer that contains units derived from a conjugated diene monomer and units derived from a compound of formula (1).

Since the ester structure of the copolymer has high affinity for the triester structure of the glycerol fatty acid triester, the use of the copolymer can reduce the rate of surface bleeding of the glycerol fatty acid triester to provide better wet grip performance after aging, fuel economy, and abrasion resistance (particularly better wet grip performance after aging). Moreover, the glycerol fatty acid triester can be localized near the copolymer to form soft domains in the rubber, which allow the tire to flexibly deform upon making contact with the road surface to give a larger actual contact area. Thus, wet grip performance can be further improved, and the effects of the present invention can be more suitably achieved.

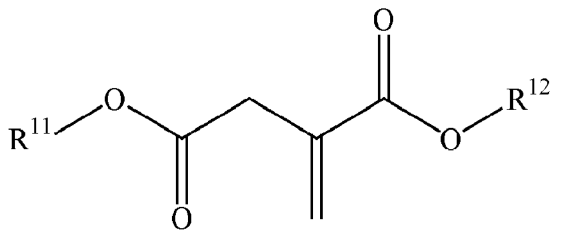

(1)

In formula (1), $R^{11}$ and $R^{12}$ are the same or different and each represent a hydrogen atom or a C1-C30 hydrocarbon group.

The structural units of the copolymer include units derived from a conjugated diene monomer. Examples of the conjugated diene monomer include 1,3-butadiene, isoprene, and 2,3-dimethyl-1,3-butadiene. In view of fuel economy, abrasion resistance, and wet grip performance, 1, 3-butadiene or isoprene is preferred among these, with 1,3-butadiene being more preferred. These monomers may be used alone, or two or more of these may be used in combination.

In the copolymer, the amount of the conjugated diene monomer unit based on 100% by mass of the structural units forming the copolymer is preferably 5% by mass or more, more preferably 30% by mass or more, still more preferably 50% by mass or more. The amount is also preferably 95% by mass or less, more preferably 90% by mass or less, still more preferably 80% by mass or less. If it is less than 5% by mass, abrasion resistance may be reduced. If it is more than 95% by mass, fuel economy may be reduced.

The structural units of the copolymer include units derived from a compound represented by the following formula (1) :

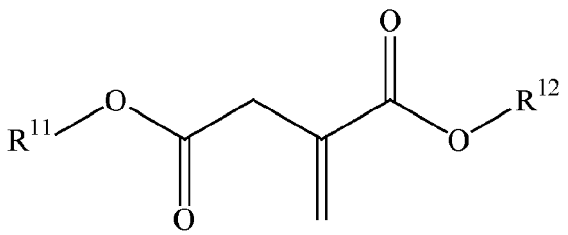

(1)

wherein $R^{11}$ and $R^{12}$ are the same or different and each represent a hydrogen atom or a C1-C30 hydrocarbon group.

The hydrocarbon group for $R^{11}$ and $R^{12}$ may be a linear, branched, or cyclic group, and examples include aliphatic hydrocarbon groups, alicyclic hydrocarbon groups, and aromatic hydrocarbon groups. Preferred among these are aliphatic hydrocarbon groups. The number of carbon atoms in the hydrocarbon group is preferably 1 to 20, more preferably 1 to 10.

The aliphatic hydrocarbon group for $R^{11}$ and $R^{12}$ is preferably a C1-C20, more preferably C1-C10 group. Preferred examples include alkyl groups, specifically, for example, methyl, ethyl, n-propyl, isopropyl, n-butyl, iso-butyl, sec-butyl, tert-butyl, pentyl, hexyl, heptyl, 2-ethylhexyl, octyl, nonyl, decyl, undecyl, dodecyl, tridecyl, tetradecyl, pentadecyl, and octadecyl groups. Preferred among these is a methyl or ethyl group, with an ethyl group being more preferred, because in this case, the balance of fuel economy, abrasion resistance, and wet grip performance can be significantly improved while achieving good processability.

The alicyclic hydrocarbon group is preferably a C3-C8 group, and specific examples include cyclopropyl, cyclobutyl, cyclopentyl, cyclohexyl, cycloheptyl, cyclooctyl, cyclopropenyl, cyclobutenyl, cyclopentenyl, cyclohexenyl, cycloheptenyl, and cyclooctenyl groups.

The aromatic hydrocarbon group is preferably a C6-C10 group, and specific examples include phenyl, benzyl, phenethyl, tolyl, xylyl, and naphthyl groups. The tolyl or xylyl group may have a methyl substituent (s) at any of the ortho, meta, and para positions on the benzene ring.

Specific examples of the compound of formula (1) include itaconic acid, 1-methyl itaconate, 4-methyl itaconate, dimethyl itaconate, 1-ethyl itaconate, 4-ethyl itaconate, diethyl itaconate, 1-propyl itaconate, 4-propyl itaconate, dipropyl itaconate, 1-butyl itaconate, 4-butyl itaconate, dibutyl itaconate, and 1-ethyl-4-methyl itaconate. Among these, diethyl itaconate, dibutyl itaconate, and 1-propyl itaconate are preferred, with diethyl itaconate being more preferred, because in this case, the balance of fuel economy, abrasion resistance, and wet grip performance can be significantly improved while achieving good processability. These compounds may be used alone, or two or more of these may be used in combination.

In the copolymer, the amount of the compound (1) unit based on 100% by mass of the structural units forming the copolymer is preferably 5% by mass or more, more preferably 8% by mass or more, still more preferably 10% by mass or more. The amount is also preferably 95% by mass or less, more preferably 50% by mass or less, still more preferably 40% by mass or less. If it is less than 5% by mass, fuel economy may be reduced. If it is more than 95% by mass, abrasion resistance may be reduced.

The structural units of the copolymer preferably include units derived from a compound represented by formula (2) below. When the copolymer contains units derived from a compound of formula (2), preferably styrene, in addition to the above-mentioned structural units, wet grip performance and abrasion resistance can be more significantly improved, and thus the balance of fuel economy, abrasion resistance, and wet grip performance can be more significantly improved while achieving good processability.

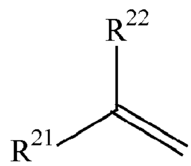

(2)

In formula (2), $R^{21}$ represents a hydrogen atom, a C1-C3 aliphatic hydrocarbon group, a C3-C8 alicyclic hydrocarbon group, or a C6-C10 aromatic hydrocarbon group, and $R^{22}$ represents a hydrogen atom or a methyl group.

Examples of the C1-C3 aliphatic hydrocarbon group in the compound of formula (2) include C1-C3 alkyl groups such as methyl, ethyl, n-propyl, and isopropyl groups. Preferred among these is a methyl group.

Examples of the C3-C8 alicyclic hydrocarbon group in the compound of formula (2) include those mentioned for the compound of formula (1).

Examples of the C6-C10 aromatic hydrocarbon group in the compound of formula (2) include those mentioned for the compound of formula (1). Phenyl, tolyl, and naphthyl groups are preferred, with a phenyl group being more preferred, because of their high reactivity.

$R^{21}$ is preferably a C6-C10 aromatic hydrocarbon group. $R^{22}$ is preferably a hydrogen atom.

Examples of the compound of formula (2) include styrene, 2-methylstyrene, 3-methylstyrene, 4-methylstyrene, α-methylstyrene, 2,4-dimethylstyrene, vinylethylbenzene, α-vinylnaphthalene, β-vinylnaphthalene, and vinylxylene. Among these, styrene, α-methylstyrene, α-vinylnaphthalene, and β-vinylnaphthalene are preferred, with styrene being more preferred, because of their high reactivity.

In the copolymer, the amount of the compound (2) unit based on 100% by mass of the structural units forming the copolymer is preferably 1% by mass or more, more preferably 5% by mass or more, still more preferably 10% by mass or more. The amount is also preferably 50% by mass or less, more preferably 30% by mass or less, still more preferably 20% by mass or less. When it is within the range indicated above, the effects of the present invention can be more suitably achieved.

In the copolymer, the combined amount of the compound (1) unit and the compound (2) unit based on 100% by mass of the structural units forming the copolymer is preferably 5% by mass or more, more preferably 8% by mass or more, still more preferably 10% by mass or more, particularly preferably 15% by mass or more. The combined amount is also preferably 95% by mass or less, more preferably 70% by mass or less, still more preferably 50% by mass or less, particularly preferably 40% by mass or less, most preferably 30% by mass or less. When it is within the range indicated above, the effects of the present invention can be more suitably achieved.

The amounts of monomer units, such as the conjugated diene monomer unit and the compound (1) or (2) unit, in the copolymer may be measured by NMR (Bruker).

The copolymer may be produced by any copolymerization method, such as solution polymerization, emulsion

polymerization, gas phase polymerization, or bulk polymerization. Emulsion polymerization is preferred because this method allows for high yield production of the copolymer. The copolymer may be prepared with reference to, for example, WO2015/075971, which is incorporated herein by reference.

The copolymer preferably has a weight average molecular weight (Mw) of 5,000 or more, more preferably 50,000 or more, still more preferably 100,000 or more, particularly preferably 300,000 or more, most preferably 450,000 or more. The weight average molecular weight is also preferably 2,000,000 or less, more preferably 1,500,000 or less, still more preferably 1,000,000 or less. A Mw of less than 5,000 may lead to deteriorated fuel economy and abrasion resistance. A Mw of more than 2,000,000 may lead to deteriorated processability.

The ratio of Mw to Mn (number average molecular weight), i.e. molecular weight distribution (Mw/Mn), of the copolymer is preferably 2.1 or more, more preferably 2.5 or more, still more preferably 3.0 or more. The molecular weight distribution is also preferably 11 or less, more preferably 8.0 or less, still more preferably 5.0 or less. A molecular weight distribution of less than 2.1 may lead to deteriorated processability. A molecular weight distribution of more than 11 may lead to deteriorated fuel economy.

The copolymer preferably has a glass transition temperature (Tg) of -100 to 100°C, more preferably -70 to 0°C. When the grass transition temperature is within the above range, the effects of the present invention can be more suitably achieved.

Herein, the Tg is measured at a rate of temperature increase of 10°C/min in accordance with JIS K 7121:1987 using a differential scanning calorimeter (Q200) available from TA Instruments, Japan.

The copolymer preferably has a Mooney viscosity ($ML_{1+4}$) at 130°C of 30 to 100, more preferably 40 to 80. When the $ML_{1+4}$ is within the above range, the effects of the present invention can be more suitably achieved.

The Mooney viscosity ($ML_{1+4}$, 130°C) is measured at 130°C in accordance with JIS-K6300.

The amount of the copolymer, if present, based on 100% by mass of the rubber component is preferably 5% by mass or more, more preferably 10% by mass or more. The amount of the copolymer is also preferably 60% by mass or less, more preferably 30% by mass or less, still more preferably 20% by mass or less. When it is within the range indicated above, the effects of the present invention tend to be better achieved.

The rubber composition of the present invention preferably contains a reinforcing filler.

Non-limiting examples of the reinforcing filler include silica, carbon black, calcium carbonate, talc, alumina, clay, aluminum hydroxide, aluminum oxide, and mica. To more suitably achieve the effects of the present invention, silica or carbon black is preferred among these.

The amount of the reinforcing filler per 100 parts by mass of the rubber component is preferably 15 parts by mass or more, more preferably 20 parts by mass or more, still more preferably 40 parts by mass or more, particularly preferably 55 parts by mass or more, most preferably 70 parts by mass or more, yet most preferably 80 parts by mass or more. An amount of not less than the lower limit tends to provide sufficient reinforcing properties leading to better abrasion resistance and wet grip performance. The amount is also preferably 250 parts by mass or less, more preferably 200 parts by mass or less, still more preferably 150 parts by mass or less, particularly preferably 120 parts by mass or less. An amount of not more than the upper limit tends to lead to better fuel economy.

Examples of the silica include dry silica (anhydrous silica) and wet silica (hydrous silica). Wet silica is preferred because it contains a large number of silanol groups. Since the triester structure of the glycerol fatty acid triester has high affinity for the silanol groups on the surface of silica, the incorporation of silica can reduce the rate of surface bleeding of the glycerol fatty acid triester to provide better wet grip performance after aging, fuel economy, and abrasion resistance (particularly better wet grip performance after aging). Thus, the effects of the present invention can be more suitably achieved.

The silica preferably has a nitrogen adsorption specific surface area ($N_2SA$) of 50 $m^2/g$ or more, more preferably 120 $m^2/g$ or more, still more preferably 150 $m^2/g$ or more. A $N_2SA$ of not less than the lower limit may lead to better abrasion resistance and wet grip performance. The $N_2SA$ is preferably 400 $m^2/g$ or less, more preferably 200 $m^2/g$ or less, still more preferably 180 $m^2/g$ or less. A $N_2SA$ of not more than the upper limit may lead to better fuel economy.

The nitrogen adsorption specific surface area of the silica is measured by the BET method in accordance with ASTM D3037-81.

The silica may be a product of, for example, Degussa, Rhodia, Tosoh Silica Corporation, Solvay Japan, or Tokuyama Corporation.

The amount of silica per 100 parts by mass of the rubber component is preferably 20 parts by mass or more, more preferably 50 parts by mass or more, still more preferably 60 parts by mass or more, particularly preferably 70 parts by mass or more. An amount of not less than the lower limit may provide better initial wet grip performance, wet grip performance after aging, fuel economy, and abrasion resistance (particularly better wet grip performance after aging). The amount is also preferably 150 parts by mass or less, more preferably 120 parts by mass or less, still more preferably 100 parts by mass or less. An amount of not more than the upper limit may facilitate uniform dispersion of silica in the rubber composition, thereby resulting in better initial wet grip performance, wet grip performance after aging, fuel economy, and abrasion resistance.

The amount of silica based on 100% by mass of the total reinforcing filler is preferably 50% by mass or more, more preferably 60% by mass or more, still more preferably 70% by mass or more, particularly preferably 80% by mass or more, most preferably 85% by mass or more, and may be 100% by mass.

To more suitably achieve the effects of the present invention, the ratio of the amount of the glycerol fatty acid triester to the amount of silica preferably satisfies relationship (B) below.

Since the triester structure of the glycerol fatty acid triester has high affinity for the silanol groups on the surface of silica, the incorporation of silica can reduce the rate of surface bleeding of the glycerol fatty acid triester to provide better wet grip performance after aging, fuel economy, and abrasion resistance (particularly better wet grip performance after aging). When relationship (B) is satisfied, the above effect can be more significantly achieved, and thus the effects of the present invention can be more suitably achieved.

To more suitably achieve the effects of the present invention, the lower limit in relationship (B) is preferably 0.25 or more, more preferably 0.40 or more, particularly preferably 0.50 or more, most preferably 0.60 or more.

(B): 0.15 ≤ the amount (parts by mass) of the glycerol fatty acid triester/the amount (parts by mass) of silica ≤ 0.70

Non-limiting examples of the carbon black include N134, N110, N220, N234, N219, N339, N330, N326, N351, N550, and N762. These types of carbon black may be used alone, or two or more of these may be used in combination.

The carbon black preferably has a nitrogen adsorption specific surface area ($N_2SA$) of 5 $m^2/g$ or more, more preferably 50 $m^2/g$ or more, still more preferably 100 $m^2/g$ or more, particularly preferably 120 $m^2/g$ or more. A $N_2SA$ of not less than the lower limit tends to lead to better abrasion resistance and wet grip performance. The $N_2SA$ is also preferably 300 $m^2/g$ or less, more preferably 180 $m^2/g$ or less, still more preferably 150 $m^2/g$ or less. The carbon black having a $N_2SA$ of not more than the upper limit tends to disperse better, resulting in better abrasion resistance, wet grip performance, and fuel economy.

The nitrogen adsorption specific surface area of the carbon black is determined in accordance with JIS K 6217-2:2001.

The carbon black may be a product of, for example, Asahi Carbon Co., Ltd., Cabot Japan K.K., Tokai Carbon Co., Ltd., Mitsubishi Chemical Corporation, Lion Corporation, NSCC Carbon Co., Ltd, or Columbia Carbon.

The amount of carbon black, if present, per 100 parts by mass of the rubber component is preferably 3 parts by mass or more, more preferably 5 parts by mass or more. An amount of not less than the lower limit tends to provide sufficient reinforcing properties leading to better abrasion resistance and wet grip performance. The amount is also preferably 50 parts by mass or less, more preferably 30 parts by mass or less, still more preferably 20 parts by mass or less. An amount of not more than the upper limit tends to lead to better fuel economy.

To better achieve the effects of the present invention, the combined amount of carbon black and silica per 100 parts by mass of the rubber component is preferably 20 to 200 parts by mass, more preferably 40 to 150 parts by mass, still more preferably 80 to 120 parts by mass.

The rubber composition of the present invention preferably contains a silane coupling agent together with silica.

Non-limiting examples of the silane coupling agent include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These silane coupling agents may be used alone, or two or more of these may be used in combination. Among these, sulfide silane coupling agents or mercapto silane coupling agents are preferred in order to better achieve the effects of the present invention.

The silane coupling agent may be a product of, for example, Degussa, Momentive, Shin-Etsu Silicone, Tokyo Chemical Industry Co., Ltd., AZmax. Co., or Dow Corning Toray Co., Ltd.

The amount of the silane coupling agent, if present, per 100 parts by mass of silica is preferably 3 parts by mass or more, more preferably 5 parts by mass or more. An amount of 3 parts by mass or more tends to allow the added silane coupling agent to produce its effect. The amount is also preferably 20 parts by mass or less, more preferably 10

parts by mass or less. An amount of not more than 20 parts by mass tends to lead to an effect commensurate with the added amount, as well as good processability during kneading.

In the present invention, a resin having a glass transition temperature (Tg) of 40 to 120°C is preferably added. In this case, the effects of the present invention can be more suitably achieved.

The resin preferably has a glass transition temperature of 40 to 120°C, more preferably 60 to 120°C, still more preferably 80 to 120°C. In this case, the effects of the present invention can be more suitably achieved.

The resin preferably has a softening point of 30°C or higher, more preferably 60°C or higher, still more preferably 80°C or higher. A softening point of 30°C or higher tends to lead to better abrasion resistance and wet grip performance. The softening point is also preferably 160°C or lower, more preferably 140°C or lower, still more preferably 120°C or lower. The resin having a softening point of 160°C or lower tends to have good dispersibility leading to better abrasion resistance, wet grip performance, and fuel economy.

Herein, the softening point of the resin is determined as set forth in JIS K 6220-1:2001 with a ring and ball softening point measuring apparatus and is defined as the temperature at which the ball drops down.

Any resin having the above-defined Tg may be used. Examples include styrene resins, coumarone-indene resins, terpene resins, p-t-butylphenol acetylene resins, acrylic resins, dicyclopentadiene resins (DCPD resins), C5 petroleum resins, C9 petroleum resins, and C5/C9 petroleum resins. These resins may be used alone, or two or more of these may be used in combination. To more suitably achieve the effects of the present invention, styrene resins, terpene resins, and DCPD resins are preferred among these, with styrene resins being more preferred.

Styrene resins refer to polymers produced from styrenic monomers as structural monomers, and examples include polymers produced by polymerizing a styrenic monomer as a main component (50% by mass or more). Specific examples include: homopolymers produced by polymerizing a styrenic monomer (e.g. styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene) alone; copolymers produced by copolymerizing two or more styrenic monomers; and copolymers of styrenic monomers and additional monomers copolymerizable therewith.

Examples of the additional monomers include acrylonitriles such as acrylonitrile and methacrylonitrile, unsaturated carboxylic acids such as acrylic acid and methacrylic acid, unsaturated carboxylic acid esters such as methyl acrylate and methyl methacrylate, dienes such as chloroprene, butadiene, and isoprene, and olefins such as 1-butene and 1-pentene; and α,β-unsaturated carboxylic acids and acid anhydrides thereof such as maleic anhydride.

In particular, α-methylstyrene resins (e.g. α-methylstyrene homopolymer, copolymers of α-methylstyrene and styrene) are preferred in view of the balance of the properties.

Coumarone-indene resins refer to resins that contain coumarone and indene as monomer components forming the skeleton (backbone) of the resins. Examples of monomer components other than coumarone and indene which may be contained in the skeleton include styrene, α-methylstyrene, methylindene, and vinyltoluene.

Examples of the terpene resins include polyterpene, terpene phenol, and aromatic modified terpene resins.

Polyterpene resins refer to resins produced by polymerization of terpene compounds, or hydrogenated products of the resins. The term "terpene compound" refers to a hydrocarbon having a composition represented by $(C_5H_8)_n$ or an oxygen-containing derivative thereof, each of which has a terpene backbone and is classified as, for example, a monoterpene ($C_{10}H_{16}$), sesquiterpene ($C_{15}H_{24}$), or diterpene ($C_{20}H_{32}$). Examples of the terpene compound include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol.

Examples of the polyterpene resins include terpene resins made from the aforementioned terpene compounds, such as α-pinene resin, β-pinene resin, limonene resin, dipentene resin, and β-pinene-limonene resin; and hydrogenated terpene resins produced by hydrogenation of the foregoing terpene resins.

Examples of the terpene phenol resins include resins produced by copolymerization of the aforementioned terpene compounds and phenolic compounds; and resins produced by hydrogenation of these resins. Specific examples include resins produced by condensation of the aforementioned terpene compounds, phenolic compounds, and formaldehyde. The phenolic compounds include, for example, phenol, bisphenol A, cresol, and xylenol.

Examples of the aromatic modified terpene resins include resins obtained by modifying terpene resins with aromatic compounds; and resins produced by hydrogenation of these resins. The aromatic compound may be any compound having an aromatic ring, such as: phenol compounds, e.g. phenol, alkylphenols, alkoxyphenols, and unsaturated hydrocarbon group-containing phenols; naphthol compounds, e.g. naphthol, alkylnaphthols, alkoxynaphthols, and unsaturated hydrocarbon group-containing naphthols; styrene and styrene derivatives, e.g. alkylstyrenes, alkoxystyrenes, and unsaturated hydrocarbon group-containing styrenes; and coumarone and indene.

Examples of the p-t-butylphenol acetylene resins include resins produced by condensation of p-t-butylphenol and acetylene.

The acrylic resin is not particularly limited. It may suitably be a solvent-free acrylic resin because it contains few impurities and has a sharp molecular weight distribution.

The solvent-free acrylic resin may be a (meth)acrylic resin (polymer) synthesized by high temperature continuous

polymerization (high temperature continuous bulk polymerization as described in, for example, US Patent No. 4,414,370, JP S59-6207 A, JP H5-58005 B, JP H1-313522 A, US Patent No. 5,010,166, annual research report TREND 2000 issued by Toagosei Co., Ltd., vol. 3, pp. 42-45, all of which are hereby incorporated by reference) using no or minimal amounts of auxiliary raw materials such as polymerization initiators, chain transfer agents, and organic solvents. In the present invention, the term "(meth)acrylic" means methacrylic and acrylic.

Preferably, the acrylic resin is substantially free of auxiliary raw materials such as polymerization initiators, chain transfer agents, and organic solvents. The acrylic resin is also preferably one having a relatively narrow composition distribution or molecular weight distribution, produced by continuous polymerization.

As described above, the acrylic resin is preferably one which is substantially free of auxiliary raw materials such as polymerization initiators, chain transfer agents, and organic solvents, namely, which is of high purity. The acrylic resin preferably has a purity (resin content in the resin) of 95% by mass or more, more preferably 97% by mass or more.

Examples of the monomer component of the acrylic resin include (meth)acrylic acid and (meth)acrylic acid derivatives such as (meth)acrylic acid esters (e.g., alkyl esters, aryl esters, aralkyl esters), (meth)acrylamide, and (meth)acrylamide derivatives.

In addition to such (meth) acrylic acid or (meth)acrylic acid derivatives, aromatic vinyls such as styrene, α-methylstyrene, vinyltoluene, vinylnaphthalene, divinylbenzene, trivinylbenzene, or divinylnaphthalene may be used as monomer components for forming the acrylic resin.

The acrylic resin may be formed only of the (meth) acrylic component or may further contain constituent components other than the (meth)acrylic component.

The acrylic resin may contain a hydroxyl group, a carboxyl group, a silanol group, or the like.

The resin (e.g. a styrene resin or coumarone-indene resin) may be a product of, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., JX Energy Corporation, Arakawa Chemical Industries, Ltd., or Taoka Chemical Co., Ltd.

The amount of the resin, if present, per 100 parts by mass of the rubber component is preferably 1 part by mass or more, more preferably 3 parts by mass or more, still more preferably 5 parts by mass or more. The amount is also preferably 50 parts by mass or less, more preferably 30 parts by mass or less, still more preferably 20 parts by mass or less. When it is within the range indicated above, the effects of the present invention can be more suitably achieved.

The resin, if used, is preferably in the form of a molten mixture of the glycerol fatty acid triester and the resin having a glass transition temperature of 40 to 120°C. In this case, the rate of surface bleeding of the glycerol fatty acid triester can be reduced to obtain better wet grip performance after aging, fuel economy, and abrasion resistance (particularly better wet grip performance after aging and abrasion resistance). Thus, the effects of the present invention can be more suitably achieved.

The molten mixture is prepared by melt mixing the glycerol fatty acid triester and the resin having a glass transition temperature of 40 to 120°C.

To more suitably achieve the effects of the present invention, the ratio of the amount of the resin to the amount of the glycerol fatty acid triester (the resin/the glycerol fatty acid triester) in the molten mixture preferably satisfies relationship (C) below.

To more suitably achieve the effects of the present invention, the lower limit in relationship (C) is preferably 0.15 or more, more preferably 0.20 or more, while the upper limit in relationship (C) is preferably 0.60 or less, more preferably 0.50 or less, still more preferably 0.40 or less, particularly preferably 0.30 or less.

(C): 0.10 ≤ the amount (parts by mass) of the resin/the amount (parts by mass) of the glycerol fatty acid triester ≤ 0.70

The molten mixture may be prepared by mixing the glycerol fatty acid triester with the resin at a temperature equal to or higher than their melting temperatures. For example, they maybe melt mixed at 100 to 250°C for 5 to 30 minutes, for example at 120°C for 10 minutes. The melt mixing may be carried out using known heaters and mixers. For example, the glycerol fatty acid triester and the resin may be heated and melted with stirring in an oil bath, a thermostat chamber, or the like to prepare a molten mixture.

The molten mixture thus prepared is preferably liquid at room temperature (25°C). When the mixture in liquid state is kneaded with the rubber component, the glycerol fatty acid triester can be dispersed well in the rubber component, and thus the effects of the present invention can be more suitably achieved.

The molten mixture preferably has a dynamic viscosity at 30°C of 100 to 1,500 mPa·s, more preferably 150 to 1,000 mPa·s, still more preferably 200 to 500 mPa·s. When the dynamic viscosity is within the above range, the rate of surface bleeding of the glycerol fatty acid triester can be reduced to obtain better wet grip performance after aging, fuel

economy, and abrasion resistance (particularly better wet grip performance after aging). Thus, the effects of the present invention can be more suitably achieved.

The dynamic viscosity of the molten mixture may be adjusted within the above range, for example, by varying the amount ratio of the resin and the glycerol fatty acid triester or the softening point or weight average molecular weight of the resin used. A person skilled in the art can appropriately adjust these parameters.

Herein the dynamic viscosity is measured at 30°C in accordance with JIS K 7117.

The amount of the molten mixture, if present, per 100 parts by mass of the rubber component is preferably 5 parts by mass or more, more preferably 10 parts by mass or more, still more preferably 15 parts by mass or more, particularly preferably 20 parts by mass or more. The amount of the molten mixture is also preferably 100 parts by mass or less, more preferably 80 parts by mass or less, still more preferably 60 parts by mass or less, particularly preferably 40 parts by mass or less. When the amount is within the range indicated above, the effects of the present invention can be more suitably achieved.

The rubber composition of the present invention preferably contains an antioxidant.

Examples of the antioxidant include: naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis-[methylene-3-(3',5'-di-t-butyl-4'-hydroxyphenyl)-propionate]methane. These antioxidants may be used alone, or two or more of these may be used in combination. Among these, p-phenylenediamine antioxidants or quinoline antioxidants are preferred, with N-(1,3-dimethylbutyl)-N'-phenyl-p-phenylenediamine or 2,2,4-trimethyl-1,2-dihydroquinoline polymer being more preferred.

The antioxidant may be a product of, for example, Seiko Chemical Co., Ltd., Sumitomo Chemical Co., Ltd., Ouchi Shinko Chemical Industrial Co., Ltd., or Flexsys.

The amount of the antioxidant, if present, per 100 parts by mass of the rubber component is preferably 1 part by mass or more, more preferably 2 parts by mass or more. The amount is also preferably 10 parts by mass or less, more preferably 7 parts by mass or less.

The rubber composition of the present invention preferably contains stearic acid.

The stearic acid may be a conventional one, and examples include products of NOF Corporation, Kao Corporation, Wako Pure Chemical Industries, Ltd., and Chiba Fatty Acid Co., Ltd.

The amount of stearic acid, if present, per 100 parts by mass of the rubber component is preferably 0.5 parts by mass or more, more preferably 1 part by mass or more. The amount is also preferably 10 parts by mass or less, more preferably 5 parts by mass or less. When it is within the range indicated above, the effects of the present invention tend to be well achieved.

The rubber composition of the present invention preferably contains zinc oxide.

The zinc oxide may be a conventional one, and examples include products of Mitsui Mining & Smelting Co., Ltd., Toho Zinc Co., Ltd., HakusuiTech Co., Ltd., Seido Chemical Industry Co., Ltd. and Sakai Chemical Industry Co., Ltd.

The amount of zinc oxide, if present, per 100 parts by mass of the rubber component is preferably 0.5 parts by mass or more, more preferably 1 part by mass or more. The amount is also preferably 10 parts by mass or less, more preferably 5 parts by mass or less. When it is within the range indicated above, the effects of the present invention tend to be better achieved.

The rubber composition of the present invention preferably contains sulfur.

Examples of the sulfur include those used commonly in the rubber industry, such as powdered sulfur, precipitated sulfur, colloidal sulfur, insoluble sulfur, highly dispersible sulfur, and soluble sulfur. These types of sulfur may be used alone, or two or more of these may be used in combination.

The sulfur may be a product of, for example, Tsurumi Chemical Industry Co., Ltd., Karuizawa sulfur Co., Ltd., Shikoku Chemicals Corporation, Flexsys, Nippon Kanryu Industry Co., Ltd., or Hosoi Chemical Industry Co., Ltd.

The amount of sulfur, if present, per 100 parts by mass of the rubber component is preferably 0.5 parts by mass or more, more preferably 0.8 parts by mass or more. The amount is also preferably 10 parts by mass or less, more preferably 5 parts by mass or less, still more preferably 3 parts by mass or less. When it is within the range indicated above, the effects of the present invention tend to be well achieved.

The rubber composition of the present invention preferably contains a vulcanization accelerator.

Examples of the vulcanization accelerator include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and

orthotolylbiguanidine. These vulcanization accelerators may be used alone, or two or more of these may be used in combination. Among these, sulfenamide vulcanization accelerators or guanidine vulcanization accelerators are preferred because the effects of the present invention can then be more suitably achieved.

The amount of the vulcanization accelerator, if present, per 100 parts by mass of the rubber component is preferably 1 part by mass or more, more preferably 2 parts by mass or more. The amount is also preferably 10 parts by mass or less, more preferably 7 parts by mass or less. When it is within the range indicated above, the effects of the present invention tend to be well achieved.

The rubber composition of the present invention preferably contains a wax.

Non-limiting examples of the wax include petroleum waxes such as paraffin wax and microcrystalline wax; naturally-occurring waxes such as plant and animal waxes; and synthetic waxes such as polymers of ethylene, propylene, or the like. These waxes may be used alone, or two or more of these may be used in combination.

The wax may be a product of, for example, Ouchi Shinko Chemical Industrial Co., Ltd., Nippon Seiro Co., Ltd., or Seiko Chemical Co., Ltd.

The amount of the wax, if present, per 100 parts by mass of the rubber component is preferably 0.5 parts by mass or more, more preferably 1 part by mass or more. The amount is also preferably 10 parts by mass or less, more preferably 7 parts by mass or less.

In addition to the above components, the rubber composition may contain additives commonly used in the tire industry, such as vulcanizing agents other than sulfur (e.g., organic crosslinking agents, organic peroxides).

The rubber composition of the present invention may be prepared by conventional methods. Specifically, the rubber composition may be prepared, for example, by kneading the components using a Banbury mixer, a kneader, an open roll mill, or other kneading machines, and then vulcanizing the kneaded mixture.

When the molten mixture is used, the method preferably includes:

a step of mixing the glycerol fatty acid triester and the resin at a temperature equal to or higher than their melting temperatures to prepare a molten mixture; and
a step of kneading the rubber component with the molten mixture prepared by previously mixing the glycerol fatty acid triester and the resin at a temperature equal to or higher than their melting temperatures.

The kneading conditions when additives other than vulcanizing agents and vulcanization accelerators are added include a kneading temperature of usually 50 to 200°C, preferably 80 to 190°C and a kneading time of usually 30 seconds to 30 minutes, preferably one minute to 30 minutes.

When a vulcanizing agent and/or a vulcanization accelerator are added, the kneading temperature is usually 100°C or lower, and preferably ranges from room temperature to 80°C. The rubber composition containing a vulcanizing agent and/or a vulcanization accelerator is usually vulcanized by, for example, press vulcanization. The vulcanization temperature is usually 120 to 200°C, preferably 140 to 180°C.

The rubber composition of the present invention can be used for, for example, tires, footwear soles, industrial belts, packings, seismic isolators, or medical stoppers, and suitably for tires.

The rubber composition of the present invention is suitable for treads (cap treads) but may also be used in tire components other than treads, such as sidewalls, base treads, undertreads, clinch apexes, bead apexes, breaker cushions, carcass cord topping rubbers, insulations, chafers, and innerliners, or in side reinforcing layers of run-flat tires.

The pneumatic tire of the present invention may be produced using the rubber composition by conventional methods.

Specifically, the unvulcanized rubber composition containing the components may be extruded into the shape of a tire component such as a tread, assembled with other tire components on a tire building machine in a usual manner to build an unvulcanized tire, which is then heated and pressurized in a vulcanizer to produce a tire.

The pneumatic tire of the present invention can be suitably used as a tire for passenger vehicles, large passenger vehicles, large SUVs, heavy load vehicles such as trucks and buses, light trucks, or two-wheeled vehicles, or as a run-flat tire or racing tire, and especially as a tire for passenger vehicles.

## EXAMPLES

The present invention is specifically described with reference to examples, but not limited thereto.

The chemicals used in production examples are listed below.

Ion-exchanged water: an in-house product
Potassium rosinate soap: a product of Harima Chemicals Group, Inc.
Fatty acid sodium soap: a product of Wako Pure Chemical Industries, Ltd.
Potassium chloride: a product of Wako Pure Chemical Industries, Ltd.

Sodium naphthalene sulfonate-formaldehyde condensate: a product of Kao Corporation
Styrene: styrene available from Wako Pure Chemical Industries, Ltd.
1,3-Butadiene: 1,3-butadiene available from Takachiho Trading Co., Ltd.
t-Dodecyl mercaptan: tert-dodecyl mercaptan (chain transfer agent) available from Wako Pure Chemical Industries, Ltd.
Sodium hydrosulfide: a product of Wako Pure Chemical Industries, Ltd.
$FeSO_4$: ferric sulfate available from Wako Pure Chemical Industries, Ltd.
EDTA: sodium ethylenediaminetetraacetate available from Wako Pure Chemical Industries, Ltd.
Rongalite: sodium formaldehyde sulfoxylate available from Wako Pure Chemical Industries, Ltd.
Polymerization initiator: paramenthane hydroperoxide available from NOF Corporation
Polymerization terminator: N,N-diethylhydroxylamine available from Wako Pure Chemical Industries, Ltd.
2,6-Di-t-butyl-p-cresol: Sumilizer BHT available from Sumitomo Chemical Co., Ltd.
Diethyl itaconate (IDE): a product of Tokyo Chemical Industry Co., Ltd.

(Preparation of emulsifier)

An emulsifier was prepared by adding 9,356 g of ion-exchanged water, 1,152 g of potassium rosinate soap, 331 g of fatty acid sodium soap, 51 g of potassium chloride, and 30 g of sodium naphthalene sulfonate-formaldehyde condensate, followed by stirring at 70°C for 2 hours.

(Production Example 1)

A 50 L (interior volume) stainless steel polymerization reactor was cleaned, dried, and purged with dry nitrogen. Then, the reactor was charged with 3,500 g of 1,3-butadiene, 1,500 g of diethyl itaconate (IDE), 5.74 g of t-dodecyl mercaptan, 9, 688 g of the emulsifier, 6.3 mL of sodium hydrosulfide (1.8 M), 6.3 mL each of the activators ($FeSO_4$/EDTA/Rongalite), and 6.3 mL of the polymerization initiator (2.3 M), followed by polymerization at 10°C for three hours with stirring. After the completion of the polymerization, 2.9 g of N,N-diethylhydroxylamine was added to the reaction mixture and they were reacted for 30 minutes. The contents were taken out from the polymerization reactor and combined with 10 g of 2,6-di-t-butyl-p-cresol. After most of the water was evaporated off, the residue was dried under reduced pressure at 55°C for 12 hours to obtain copolymer 1.

(Production Example 2)

Copolymer 2 was prepared as in Production Example 1, except that the amounts of 1, 3-butadiene and diethyl itaconate (IDE) were changed to 4,000 g and 1,000 g, respectively.

(Production Example 3)

Copolymer 3 was prepared as in Production Example 1, except that the amounts of 1, 3-butadiene and diethyl itaconate (IDE) were changed to 4,250 g and 750 g, respectively.

Table 1 shows the butadiene (conjugated diene monomer) content, diethyl itaconate (compound of formula (1)) content, styrene (compound of formula (2)) content, Mw, Mw/Mn, Tg, and Mooney viscosity of the copolymers prepared in the production examples. The methods for measuring them are each described below.

(Amounts of monomer units)

A $^{1}$H-NMR spectrum was measured at 23°C using an NMR spectrometer (Bruker). This spectrum was used to calculate the ratio of the peaks from the phenyl protons of the styrene unit at 6.5 to 7.2 ppm, the vinyl protons of the butadiene unit at 4.9 to 5.4 ppm, and the isobutyl vinyl ether unit at 3.9 to 4.2 ppm. The amounts of the monomer units were determined from the ratio.

(Measurement of weight average molecular weight (Mw) and number average molecular weight (Mn))

The weight average molecular weight (Mw) and number average molecular weight (Mn) of each copolymer were determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

(Measurement of glass transition temperature (Tg))

The glass transition temperature (Tg) was defined as the glass transition onset temperature measured using a differential scanning calorimeter (Q200, TA Instruments, Japan) at a rate of temperature increase of 10°C/min in accordance with JIS K 7121.

(Mooney viscosity ($ML_{1+4}$, 130°C))

After preheating at 130°C for 1 minute, each copolymer was measured for Mooney viscosity ($ML_{1+4}$, 130°C) for 4 minutes using a Mooney viscometer (SMV-200, Shimadzu Corporation) in accordance with JIS K 6300.

[Table 1]

| Copolymer | 1 | 2 | 3 |
|---|---|---|---|
| Butadiene (conjugated diene monomer) content (% by mass) | 60 | 70 | 76 |
| Diethyl itaconate (formula (1)) content (% by mass) | 40 | 30 | 24 |
| Styrene (formula (2)) content (% by mass) | - | - | - |
| Weight average molecular weight (Mw) | 500,000 | 520,000 | 540,000 |
| Molecular weight distribution (Mw/Mn) | 3.7 | 4.2 | 4.1 |
| Tg (°C) | -48 | -60 | -66 |
| Mooney viscosity ($ML_{1+4}$, 130°C) | 46 | 48 | 49 |

(Molten mixture preparation 1)

A flask containing 100 g of the resin listed below was immersed in an oil bath to heat the resin to 120°C until the resin was completely melted. Thereto was gradually added 900 g of the glycerol fatty acid triester 3 listed below, and the mixture was completely melted and then mixed and stirred for 10 minutes. The resulting mixture was cooled in water to obtain molten mixture 1. The molten mixture 1 had a dynamic viscosity at 30°C of 120 mPa·s.

(Molten mixture preparation 2)

A flask containing 200 g of the resin listed below was immersed in an oil bath to heat the resin to 120°C until the resin was completely melted. Thereto was gradually added 800 g of the glycerol fatty acid triester 3 listed below, and the mixture was completely melted and then mixed and stirred for 10 minutes. The resulting mixture was cooled in water to obtain molten mixture 2. The molten mixture 2 had a dynamic viscosity at 30°C of 300 mPa·s.

(Molten mixture preparation 3)

A flask containing 400 g of the resin listed below was immersed in an oil bath to heat the resin to 120°C until the resin was completely melted. Thereto was gradually added 600 g of the glycerol fatty acid triester 3 listed below, and the mixture was completely melted and then mixed and stirred for 10 minutes. The resulting mixture was cooled in water to obtain molten mixture 3. The molten mixture 3 had a dynamic viscosity at 30°C of 1,480 mPa·s.

The chemicals used in the examples and comparative examples were listed below.

NR: RSS#3
SBR: NS116 (styrene content: 20% by mass) available from JSR Corporation
BR: high cis BR (cis content: 97% by mass, Mw: 400,000)
Copolymers 1 to 3: the copolymers prepared in Production Examples 1 to 3
Carbon black: Seast 9H ($N_2SA$: 142 $m^2/g$) available from Tokai Carbon Co., Ltd.
Silica: ZEOSIL 1165MP ($N_2SA$: 160 $m^2/g$) available from Rhodia
Silane coupling agent: Si75 (bis(3-triethoxysilylpropyl)disulfide) available from Degussa
Process oil: Process X-140 (aromatic oil) available from Japan Energy Corporation
Glycerol fatty acid triesters 1 to 6: vegetable oils available from The Nisshin Oillio Group, Ltd. (The properties are shown in Table 2. The fatty acid contents indicated in Table 2 mean the contents (% by mass) of the fatty acids each based on 100% by mass of the constituent fatty acids.)

Molten mixtures 1 to 3: the molten mixtures prepared in Molten mixture preparations 1 to 3
Resin: a copolymer of α-methylstyrene and styrene (softening point: 85°C, Tg: 107°C)
Zinc oxide: zinc oxide #2 available from Mitsui Mining & Smelting Co., Ltd.
Stearic acid: stearic acid "TSUBAKI" available from NOF Corporation
Antioxidant: Santoflex 13 (N-(1,3-dimethylbutyl)-N'-phenyl-p-phenylenediamine) available from Flexsys
Sulfur: powdered sulfur available from Tsurumi Chemical Industry Co., Ltd.
Vulcanization accelerator 1: NOCCELER NS (N-tert-butyl-2-benzothiazolylsulfenamide) available from Ouchi Shinko Chemical Industrial Co., Ltd.
Vulcanization accelerator 2: NOCCELER D (diphenylguanidine) available from Ouchi Shinko Chemical Industrial Co., Ltd.

[Table 2]

| | Origin | Content of fatty acids having one unsaturated bond | Content of fatty acids having two unsaturated bonds | Content of fatty acids having three unsaturated bonds | Content of fatty acids having two or more unsaturated bonds | Content of fatty acids having unsaturated bonds | Content of saturated fatty acids | Value of relationship (A) | Average carbon number of constituent fatty acids | Melting point (°C) | Iodine number |
|---|---|---|---|---|---|---|---|---|---|---|---|
| Glycerol fatty acid triester 1 | Rapeseed | 63 | 19 | 9 | 28 | 91 | 9 | 128 | 18.0 | -8 | 108 |
| Glycerol fatty acid triester 2 | Sunflower | 79 | 13 | 0 | 13 | 92 | 8 | 105 | 18.0 | -5 | 95 |
| Glycerol fatty acid triester 3 | Soybean | 23 | 54 | 10 | 64 | 87 | 13 | 161 | 17.8 | -8 | 132 |
| Glycerol fatty acid triester 4 | Sesame | 39 | 45 | 0 | 45 | 84 | 16 | 129 | 17.8 | -4 | 112 |
| Glycerol fatty acid triester 5 | Rice | 43 | 36 | 1 | 37 | 80 | 20 | 118 | 17.7 | -10 | 103 |
| Glycerol fatty acid triester 6 | Palm | 40 | 12 | 0 | 12 | 52 | 48 | 64 | 17.0 | 34 | 52 |

<Examples and Comparative Examples>

According to each of the formulations indicated in Table 3, the chemicals other than the sulfur and vulcanization accelerators were kneaded with a Banbury mixer for four minutes to give a kneaded mixture. Next, the kneaded mixture was kneaded with the sulfur and vulcanization accelerators for four minutes using an open roll mill to obtain an unvulcanized rubber composition. Then, the unvulcanized rubber composition was press-vulcanized at 170°C for 12 minutes to obtain a vulcanized rubber composition.

The unvulcanized rubber composition was formed into a tread shape and assembled with other tire components to build an unvulcanized tire. The unvulcanized tire was pressurized and heated at 170°C for 20 minutes to prepare a test tire (size: 195/65R15). The vulcanized rubber compositions and test tires prepared as above were evaluated for the following properties. Table 3 shows the results.

(Appearance rating)

The test tires were left outside under a roof to avoid rain for 60 days, and then visually observed and rated based on the following criteria.

A: Black color retained with almost no discoloration
B: Black color partially faded, but without significant discoloration
C: Appearance spoiled by local discoloration
D: Appearance significantly spoiled by clear discoloration

These criteria mean that the appearance of the tires and the retention of the blackness of the tires, and thus the appearance quality improve in the following order: D < C < B < A.

(Initial wet grip performance index)

The test tires of each formulation example were mounted on all wheels of a vehicle (front-engine, front-wheel-drive car of 2,000 cc displacement made in Japan), and the braking distance from an initial speed of 100 km/h on wet asphalt and wet concrete was determined. The results are expressed as an index. A higher index indicates better initial wet skid resistance (better initial wet grip performance). The index was calculated using the following equation.

(Initial wet grip performance index) = (Braking distance of Comparative Example 1)/(Braking distance of each formulation example) × 100

(Index of wet grip performance after aging)

The tires were left in an oven at 40°C for 60 days after the production. Then, the braking distance was determined in the same manner as described for the initial wet grip performance index. The results are expressed as an index. A higher index indicates better wet skid resistance after aging (better wet grip performance after aging). The index was calculated using the following equation.

(Index of wet grip performance after aging) = (Braking distance of the fresh tires of Comparative Example 1)/(Braking distance of the tires of each formulation example that had been left in an oven) × 100

(Fuel economy index)

The tan δ of each vulcanized rubber composition was measured at a dynamic strain amplitude of 1%, a frequency of 10 Hz, and a temperature of 50°C using a spectrometer available from Ueshima Seisakusho Co., Ltd. The reciprocals of the tan δ values are expressed as an index, with Comparative Example 1 set equal to 100. A higher index indicates a smaller rolling resistance and better fuel economy.

(Abrasion resistance index)

The volume loss of each vulcanized rubber composition was measured with a laboratory abrasion and skid tester (LAT tester) at a load of 50 N, a speed of 20 km/h, and a slip angle of 5 degrees. The volume losses are expressed as an index, with Comparative Example 1 set equal to 100. A higher index indicates better abrasion resistance.

[Table 3]

| | | Com. Ex. 1 | Com. Ex. 2 | Com. Ex. 3 | Ex. 1 | Ex. 2 | Ex. 3 | Com. Ex. 4 | Ex. 4 | Ex. 5 | Ex. 6 | Ex. 7 | Ex. 8 | Ex. 9 | Com. Ex. 5 | Ex. 10 | Ex. 11 | Ex. 12 | Ex. 13 |
|---|---|---|---|---|---|---|---|---|---|---|---|---|---|---|---|---|---|---|---|
| Formulation (parts by mass) | NR | 20 | 20 | 20 | 20 | 20 | 20 | 20 | 20 | 20 | 20 | 20 | 20 | 20 | 20 | 20 | 20 | 20 | 20 |
| | SBR | 70 | 70 | 70 | 70 | 70 | 70 | 70 | 70 | 70 | 70 | 60 | 60 | 60 | 70 | 70 | 70 | 70 | 70 |
| | BR | 10 | 10 | 10 | 10 | 10 | 10 | 10 | 10 | 10 | 10 | 10 | 10 | 10 | 10 | 10 | 10 | 10 | 10 |
| | Copolymer 1 | | | | | | | | | | | 10 | | | | | | | |
| | Copolymer 2 | | | | | | | | | | | | 10 | | | | | | |
| | Copolymer 3 | | | | | | | | | | | | | 10 | | | | | |
| | Carbon black | 10 | 10 | 10 | 10 | 10 | 10 | 10 | 10 | 10 | 10 | 10 | 10 | 10 | 10 | 10 | 10 | 10 | 5 |
| | Silica | 85 | 85 | 85 | 85 | 85 | 85 | 85 | 85 | 85 | 85 | 85 | 85 | 85 | 85 | 85 | 85 | 85 | 100 |
| | Silane coupling agent | 6.8 | 6.8 | 6.8 | 6.8 | 6.8 | 6.8 | 8 | 6.8 | 6.8 | 6.8 | 8 | 8 | 8 | 6.8 | 8 | 8 | 8 | 8 |
| | Process oil | 55 | 30 | 30 | 30 | 30 | 30 | | 45 | 15 | | 30 | 30 | 30 | 45 | 20 | 20 | 20 | 20 |
| | Glycerol fatty acid triester 1 | | 25 | | | | | | | | | | | | | | | | |
| | Glycerol fatty acid triester 2 | | | 25 | | | | | | | | | | | | | | | |
| | Glycerol fatty acid triester 3 | | | | 25 | | | | 10 | 40 | 55 | 25 | 25 | 25 | | 25 | | | |
| | Glycerol fatty acid triester 4 | | | | | 25 | | | | | | | | | | | | | |
| | Glycerol fatty acid triester 5 | | | | | | 25 | | | | | | | | | | | | |
| | Glycerol fatty acid triester 6 | | | | | | | 55 | | | | | | | | | | | |
| | Molten mixture 1 | | | | | | | | | | | | | | | | 30 | | |
| | Molten mixture 2 | | | | | | | | | | | | | | | | | 30 | |
| | Molten mixture 3 | | | | | | | | | | | | | | | | | | 30 |
| | Resin | | | | | | | | | | | | | | 5 | 5 | | | |
| | Zinc oxide | 2 | 2 | 2 | 2 | 2 | 2 | 2 | 2 | 2 | 2 | 2 | 2 | 2 | 2 | 2 | 2 | 2 | 2 |
| | Stearic acid | 2 | 2 | 2 | 2 | 2 | 2 | 2 | 2 | 2 | 2 | 2 | 2 | 2 | 2 | 2 | 2 | 2 | 2 |
| | Antioxidant | 2 | 2 | 2 | 2 | 2 | 2 | 2 | 2 | 2 | 2 | 2 | 2 | 2 | 2 | 2 | 2 | 2 | 2 |
| | Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator 1 | 2 | 2 | 2 | 2 | 2 | 2 | 2 | 2 | 2 | 2 | 2 | 2 | 2 | 2 | 2 | 2 | 2 | 2 |
| | Vulcanization accelerator 2 | 2.5 | 2 | 2 | 2 | 2 | 2 | 2 | 2 | 2 | 2 | 2 | 2 | 2 | 2 | 2 | 2 | 2 | 2 |
| | Glycerol fatty acid triester/silica ratio | 0.00 | 0.29 | 0.29 | 0.29 | 0.29 | 0.29 | 0.65 | 0.12 | 0.47 | 0.65 | 0.29 | 0.29 | 0.29 | 0.00 | 0.29 | 0.32 | 0.28 | 0.18 |
| Evaluation results | Appearance rating | B | C | B | A | A | A | D | B | B | B | A | A | A | B | A | A | A | A |
| | Initial wet grip performance index | 100 | 107 | 105 | 108 | 106 | 107 | 103 | 108 | 111 | 112 | 112 | 112 | 110 | 103 | 110 | 110 | 112 | 114 |
| | Index of wet grip performance after aging | 95 | 94 | 91 | 101 | 100 | 101 | 95 | 101 | 103 | 103 | 106 | 107 | 105 | 96 | 103 | 104 | 106 | 107 |
| | Fuel economy index | 100 | 115 | 119 | 122 | 119 | 119 | 102 | 112 | 124 | 129 | 117 | 119 | 121 | 95 | 114 | 117 | 116 | 114 |
| | Abrasion resistance index | 100 | 109 | 110 | 115 | 111 | 112 | 108 | 105 | 119 | 124 | 109 | 111 | 115 | 97 | 105 | 111 | 111 | 108 |
| | Total of four property items | 395 | 425 | 425 | 446 | 436 | 439 | 408 | 426 | 457 | 468 | 444 | 449 | 451 | 391 | 432 | 442 | 445 | 443 |

As shown in Table 3, a balanced improvement of initial wet grip performance, wet grip performance after aging, fuel economy, and abrasion resistance was achieved in the examples in which the rubber composition contained a rubber component including a diene rubber, and a glycerol fatty acid triester of plant origin that has a content of saturated fatty acids of 10 to 25% by mass and a content of monovalent unsaturated fatty acids having one unsaturated bond of less than 50% by mass, each based on 100% by mass of the constituent fatty acids.

The present invention provides a rubber composition which provides a balanced improvement of initial wet grip performance, wet grip performance after aging, fuel economy, and abrasion resistance. Also provided is a pneumatic tire formed from the rubber composition. The rubber composition contains: a rubber component including a diene rubber; and a glycerol fatty acid triester of plant origin. The glycerol fatty acid triester has a content of saturated fatty acids of 10 to 25% by mass and a content of monovalent unsaturated fatty acids having one unsaturated bond of less than 50% by mass, each based on 100% by mass of the constituent fatty acids of the triester.

## Claims

**1.** A rubber composition, comprising:

a rubber component including a diene rubber; and
a glycerol fatty acid triester of plant origin,
the glycerol fatty acid triester having a content of saturated fatty acids of 10 to 25% by mass and a content of monovalent unsaturated fatty acids having one unsaturated bond of less than 50% by mass, each based on 100% by mass of constituent fatty acids of the triester.

**2.** The rubber composition according to claim 1,
wherein the glycerol fatty acid triester has a content of polyvalent unsaturated fatty acids having two or more unsaturated bonds of 50% by mass or more based on 100% by mass of the constituent fatty acids.

**3.** The rubber composition according to claim 1 or 2,
wherein the glycerol fatty acid triester satisfies the following relationship (A):

80 ≤ the content (% by mass) of monovalent unsaturated fatty acids having one unsaturated bond based on 100% by mass of the constituent fatty acids × 1 (the number of unsaturated bonds) + the content (% by mass) of divalent unsaturated fatty acids having two unsaturated bonds based on 100% by mass of the constituent fatty acids × 2 (the number of unsaturated bonds) + the content (% by mass) of trivalent unsaturated fatty acids having three unsaturated bonds based on 100% by mass of the constituent fatty acids × 3 (the number of unsaturated bonds) ≤ 200.

**4.** The rubber composition according to any one of claims 1 to 3,
wherein the rubber composition comprises 10 to 80 parts by mass of the glycerol fatty acid triester per 100 parts by mass of the rubber component.

**5.** The rubber composition according to any one of claims 1 to 4,
wherein the rubber component includes, based on 100% by mass thereof, at least 5% by mass of a copolymer, the copolymer being synthesized by copolymerizing a conjugated diene monomer with a compound represented by the following formula (1):

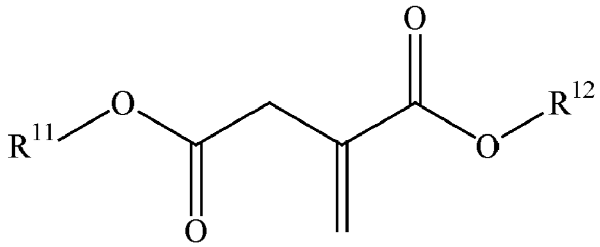

(1)

wherein $R^{11}$ and $R^{12}$ are the same or different and each represent a hydrogen atom or a C1-C30 hydrocarbon group.

**6.** The rubber composition according to claim 5,
wherein the copolymer comprises, based on 100% by mass of structural units thereof, 5 to 95% by mass of units derived from the conjugated diene monomer and 5 to 95% by mass of units derived from the compound of formula (1).

**7.** The rubber composition according to any one of claims 1 to 6,
wherein the rubber composition comprises the glycerol fatty acid triester and silica in a ratio that satisfies the following relationship (B):

0.15 ≤ the amount (parts by mass) of the glycerol fatty acid triester/the amount (parts by mass) of the silica ≤ 0.70.

**8.** The rubber composition according to any one of claims 1 to 7,
wherein the rubber composition comprises a molten mixture of the glycerol fatty acid triester and a resin having a glass transition temperature of 40 to 120°C,
the molten mixture comprises the glycerol fatty acid triester and the resin in a ratio that satisfies relationship (C) below, and
the molten mixture has a dynamic viscosity at 30°C of 100 to 1,500 mPa·s

(C): 0.10 ≤ the amount (parts by mass) of the resin/the amount (parts by mass) of the glycerol fatty acid triester ≤ 0.70.

**9.** The rubber composition according to any one of claims 1 to 8, which is a rubber composition for tires.

**10.** A pneumatic tire, comprising a tread formed from the rubber composition according to any one of claims 1 to 8.

Europäisches Patentamt
European Patent Office
Office européen des brevets

# EUROPEAN SEARCH REPORT

Application Number
EP 18 15 8310

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 733 168 A1 (GOODYEAR TIRE & RUBBER [US]) 21 May 2014 (2014-05-21)<br>* paragraph [0001] *<br>* page 2; table A *<br>* examples; tables 1-4 *<br>* claims *<br>----- | 1-10 | INV.<br>B60C1/00<br>C08K5/103 |
| X | EP 2 329 964 A1 (SUMITOMO RUBBER IND [JP]) 8 June 2011 (2011-06-08)<br>* paragraph [0057] *<br>* page 11; table *<br>----- | 1-10 | |
| X | EP 3 109 066 A1 (GOODYEAR TIRE & RUBBER [US]) 28 December 2016 (2016-12-28)<br>* examples *<br>----- | 1-10 | |
| A | EP 3 072 924 A1 (SUMITOMO RUBBER IND [JP]) 28 September 2016 (2016-09-28)<br>* paragraphs [0007], [0016] *<br>* examples *<br>* claims *<br>----- | 1-10 | |

TECHNICAL FIELDS SEARCHED (IPC)

B60C
C08K

The present search report has been drawn up for all claims

1

| Place of search | Date of completion of the search | Examiner |
|---|---|---|
| Munich | 20 September 2018 | Behm, Sonja |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 18 15 8310

This annex lists the patent family members relating to the patent documents cited in the above-mentioned European search report. The members are as contained in the European Patent Office EDP file on
The European Patent Office is in no way liable for these particulars which are merely given for the purpose of information.

20-09-2018

| Patent document cited in search report | | Publication date | Patent family member(s) | | | Publication date |
|---|---|---|---|---|---|---|
| EP 2733168 | A1 | 21-05-2014 | BR | 102013029122 | A2 | 21-10-2014 |
| | | | CN | 103819756 | A | 28-05-2014 |
| | | | EP | 2733168 | A1 | 21-05-2014 |
| | | | US | 2014135424 | A1 | 15-05-2014 |
| EP 2329964 | A1 | 08-06-2011 | CN | 102086278 | A | 08-06-2011 |
| | | | EP | 2329964 | A1 | 08-06-2011 |
| | | | JP | 5256262 | B2 | 07-08-2013 |
| | | | JP | 2011140628 | A | 21-07-2011 |
| | | | KR | 20110065303 | A | 15-06-2011 |
| | | | US | 2011136968 | A1 | 09-06-2011 |
| EP 3109066 | A1 | 28-12-2016 | EP | 3109066 | A1 | 28-12-2016 |
| | | | US | 2016376428 | A1 | 29-12-2016 |
| | | | US | 2017051135 | A1 | 23-02-2017 |
| EP 3072924 | A1 | 28-09-2016 | CN | 105873999 | A | 17-08-2016 |
| | | | EP | 3072924 | A1 | 28-09-2016 |
| | | | JP | 6008310 | B2 | 19-10-2016 |
| | | | JP | WO2015075971 | A1 | 16-03-2017 |
| | | | US | 2016288570 | A1 | 06-10-2016 |
| | | | WO | 2015075971 | A1 | 28-05-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005537369 T
- WO 2015075971 A
- US 4414370 A
- JP 59006207 A
- JP H558005 B
- JP H1313522 A
- US 5010166 A


### Non-patent literature cited in the description


- annual research report TREND. Toagosei Co., Ltd, 2000, vol. 3, 42-45